# EUROPÄISCHE PATENTSCHRIFT

(11) **EP 3 661 784 B1**
(45) Veröffentlichungstag und Bekanntmachung des Hinweises auf die Patenterteilung: **28.12.2022**
(21) Anmeldenummer: 18750133.3
(22) Anmeldetag: 31.07.2018
(51) Int. Cl.: B60K 6/48, B60K 6/365, B60K 6/547, F16H 3/72, F16H 37/04, B60K 6/36, B60K 6/387, B60K 6/38

(54) **GETRIEBE FÜR EINE HYBRIDANTRIEBSANORDNUNG, HYBRIDANTRIEBSANORDNUNG UND FAHRZEUG**
TRANSMISSION FOR A HYBRID DRIVE ARRANGEMENT, HYBRID DRIVE ARRANGEMENT AND VEHICLE
BOÎTE DE VITESSES POUR UN SYSTÈME DE PROPULSION HYBRIDE, SYSTÈME DE PROPULSION HYBRIDE ET VÉHICULE

(30) Priorität: 02.08.2017 DE 102017213329
(43) Veröffentlichungstag der Anmeldung: 10.06.2020
(73) Patentinhaber: Robert Bosch GmbH, 70442 Stuttgart (DE)
(72) Erfinder: HUBER, Thomas, 74915 Daisbach (DE); ESZTERLE, Dominik, 74078 Heilbronn (DE); SMEJKAL, Tom, 01069 Dresden (DE); WIRTH, Christian, 85452 Eichenried (DE); DEMPEL, Rolf Lucius, 74354 Besigheim (DE); BRUMMER, Simon, 82194 Gröbenzell (DE)
(86) Internationale Anmeldenummer: PCT/EP2018/070655
(87) Internationale Veröffentlichungsnummer: WO 2019/025396

(56) Entgegenhaltungen:
- DE-A1-102014 220 942
- DE-A1-102014 223 918
- US-A1- 2003 148 847

## Beschreibung

Die Erfindung betrifft ein Getriebe für eine Hybridantriebsanordnung. Ferner betrifft die Erfindung eine Hybridantriebsanordnung mit einem Getriebe und ein Fahrzeug mit einer Hybridantriebsanordnung.

### Stand der Technik

Getriebe für Hybridantriebsanordnungen sind aus dem Stand der Technik bekannt. Beispielsweise zeigt die WO2010/009943 A1 ein Doppelkupplungsgetriebe, welches den Betrieb eines Hybridfahrzeugs verbrennungsmotorisch, elektromotorisch und mit beiden Antriebsaggregaten zusammen ermöglicht. Derartige Getriebe sind komplex, schwer und teuer. Es besteht Bedarf an Getriebetopologien mit reduzierter mechanischer Komplexität, verringertem Raumbedarf und verringertem Gewicht.

In der US 2003 / 0148847 A1 wird ein Getriebe für ein Fahrzeug offenbart.

In der DE 10 2014 220 942 A1 wird ein Getriebe für ein Hybridfahrzeug offenbart.

In der DE 10 2014 223 918 A1 wird ein mehrgängiges Fahrzeuggetriebe offenbart.

Der Begriff "gekoppelt" bzw. "angekoppelt" wird im Folgenden im Sinne einer festen Verbindung benutzt. Im Gegensatz dazu umfasst der Begriff "koppelbar" im Rahmen der vorliegenden Beschreibung sowohl feste als auch schaltbare Verbindungen. Ist konkret eine schaltbare Verbindung gemeint, wird in der Regel das entsprechende Schaltelement, insbesondere eine Bremse oder eine Kupplung, explizit angegeben. Ist hingegen konkret eine feste, starre oder drehfeste Verbindung gemeint, wird in der Regel der Begriff "gekoppelt" bzw. "angekoppelt" verwendet und auf die Verwendung des Begriffs "koppelbar" verzichtet. Die Verwendung des Begriffs "koppelbar" ohne Angabe eines konkreten Schaltelementes deutet somit auf den beabsichtigten Einschluss beider Fälle hin. Diese Unterscheidung erfolgt allein zugunsten der besseren Verständlichkeit und insbesondere zur Verdeutlichung, wo das Vorsehen einer schaltbaren Verbindung anstelle einer in der Regel leichter realisierbaren festen Verbindung beziehungsweise Koppelung zwingend erforderlich ist. Die obige Definition des Begriffs "gekoppelt" bzw. "angekoppelt" ist daher keinesfalls so eng auszulegen, dass willkürlich zu Umgehungszwecken eingefügte Kupplungen aus seinem Wortsinn herausführten.

### Offenbarung der Erfindung

Es wird ein Getriebe für eine Hybridantriebsanordnung bereitgestellt, welches mit zwei Antriebsaggregaten koppelbar ist, mit einer Eingangswelle und einer Ausgangswelle, mindestens einem ersten, zweiten, dritten, vierten, fünften und einem sechsten Schaltelement und mindestens einem Planetengetriebe wobei die Eingangswelle mittels dem ersten Schaltelement koppelbar ist mit einer ersten Getriebewelle und die erste Getriebewelle mittels dem zweiten Schaltelement koppelbar ist mit dem Hohlrad des Planetengetriebes und die erste Getriebewelle mittels dem dritten Schaltelement koppelbar ist mit einer zweiten Getriebewelle und die erste Getriebewelle mittels dem vierten Schaltelement koppelbar ist mit einer dritten Getriebewelle und wobei
die Ausgangswelle mittels dem fünften Schaltelement koppelbar ist mit der dritten Getriebewelle und die Ausgangswelle mit dem Planetenträger des Planetengetriebes gekoppelt ist wobei
die zweite Getriebewelle mittels dem sechsten Schaltelement koppelbar ist mit dem Sonnenrad des ersten Planetengetriebes.

Es wird ein Getriebe für eine Hybridantriebsanordnung bereitgestellt. Für den Betrieb der Hybridantriebsanordnung sind zwei Antriebsaggregate an das Getriebe koppelbar. Das Getriebe umfasst eine Eingangswelle und eine Ausgangswelle, mindestens ein erstes, zweites, drittes, viertes, fünftes und sechstes Schaltelement und mindestens ein Planetengetriebe. Die Ausgangswelle ist mit dem Planetenträger des Planetengetriebes gekoppelt. Im Rahmen der Beschreibung ist eine Koppelung als eine Verbindung zu verstehen, welche starr, beispielsweise einstückig, beispielsweise mittels einer Welle, oder mit einer festen Übersetzung oder Getriebestufe ausgeführt ist. Die Eingangswelle ist mittels dem ersten Schaltelement koppelbar mit einer ersten Getriebewelle. Die erste Getriebewelle ist mittels dem zweiten Schaltelement koppelbar mit dem Hohlrad des Planetengetriebes. Weiter ist die erste Getriebewelle mittels des dritten Schaltelementes koppelbar mit einer zweiten Getriebewelle. Weiter ist die erste Getriebewelle mittels des vierten Schaltelementes koppelbar mit einer dritten Getriebewelle. Die zweite Getriebewelle ist mittels dem sechsten Schaltelement koppelbar mit dem Sonnenrad des Planetengetriebes. Die Ausgangswelle ist mittels dem fünften Schaltelement koppelbar mit der dritten Getriebewelle. Insbesondere ist die Ausgangswelle mit einem Abtrieb koppelbar. Ein Abtrieb ist insbesondere mindestens eine Welle oder eine Achse, die die Bewegung der Ausgangswelle auf den mechanischen Antriebsstrang eines Fahrzeugs, beispielsweise auf ein Differenzial oder auf ein Antriebsrad überträgt. Vorteilhaft wird ein Getriebe bereitgestellt, welches die Drehzahl und das Drehmoment, welches an der Eingangswelle anliegt, bei geschlossenem erstem, zweitem, drittem und sechstem und geöffnetem viertem und fünftem Schaltelement entsprechend der Übersetzungsverhältnisse in dem Getriebe auf die Ausgangswelle überträgt. Bei geöffneten ersten Schaltelement ist die Eingangswelle von der Ausgangswelle abgekoppelt.

Gemäß der Erfindung umfasst das Getriebe desweiteren ein siebtes Schaltelement, welches dazu eingerichtet ist, die zweite Getriebewelle mit einem Fixpunkt zu koppeln.

Für das Getriebe ist somit ein siebtes Schaltelement vorgesehen, welches ein Freigeben oder Festhalten der zweiten Getriebewelle ermöglicht, insbesondere ein Verbinden der zweiten Getriebewelle oder ein Abstützen der zweiten Getriebewelle an einem Fixpunkt oder an einem Gehäuse des Getriebes. Das Festhalten der zweiten Getriebewelle umfasst das feste, starre fixieren der stillstehenden zweiten Getriebewelle. Das Freigeben der zweiten Getriebewelle umfasst das Lösen der Fixierung, so dass die zweite Getriebewelle entsprechend der auf die zweite Getriebewelle wirkenden Kräfte beschleunigt. Vorteilhaft lassen sich mit der bisher beschriebenen Topologie des Getriebes mit den ersten bis siebten Schaltelementen, neben den bereits erwähnten, weitere Betriebsmodi einstellen. So ergibt sich bei geschlossenem siebten, ersten, zweiten, fünften und sechsten und geöffneten dritten und vierten Schaltelement das vierthöchste mit diesem Getriebe erzielbare Übersetzungsverhältnis zwischen der Eingangswelle und Ausgangswelle.

In einer anderen Ausgestaltung der Erfindung umfasst das Getriebe ein achtes Schaltelement, welches dazu eingerichtet ist, das Hohlrad des Planetengetriebes mit einem Fixpunkt zu koppeln.

Für das Getriebe ist ein achtes Schaltelement vorgesehen, welches ein Freigeben oder Festhalten des Hohlrades des Planetengetriebes ermöglicht, insbesondere ein Verbinden des Hohlrades des Planetengetriebes oder ein Abstützen des Hohlrades des Planetengetriebes an einem Fixpunkt oder an einem Gehäuse des Getriebes. Das Festhalten des Hohlrades des Planetengetriebes umfasst das feste, starre fixieren des stillstehenden Hohlrades des Planetengetriebes. Das Freigeben des Hohlrades des Planetengetriebes umfasst das Lösen der Fixierung, so dass das Hohlrad des Planetengetriebes entsprechend der auf das Hohlrad wirkenden Kräfte beschleunigt. Vorteilhaft lassen sich mit der bisher beschriebenen Topologie des Getriebes mit den ersten bis achten Schaltelementen, neben den bereits erwähnten, weitere Betriebsmodi einstellen. So ergibt sich bei geschlossenem achten, ersten, dritten, vierten und fünften und geöffneten zweiten, sechsten und siebten Schaltelement das dritthöchste mit diesem Getriebe erzielbare Übersetzungsverhältnis zwischen der Eingangswelle und Ausgangswelle.

In einer anderen Ausgestaltung der Erfindung umfasst das Getriebe ein neuntes Schaltelement, welches dazu eingerichtet ist, die dritte Getriebewelle mit dem Sonnenrad des Planetengetriebes zu koppeln.

Für das Getriebe ist ein neuntes Schaltelement vorgesehen, welches ein Freigeben oder koppeln der dritten Getriebewelle mit dem Sonnenrad des Planetengetriebes ermöglicht. Das Koppeln der dritten Getriebewelle mit dem Sonnenrad des Planetengetriebes umfasst das drehfeste, starre Verbinden der dritten Getriebewelle mit dem Sonnenrad des Planetengetriebes. Das Freigeben der dritten Getriebewelle von dem Sonnenrad des Planetengetriebes umfasst das Lösen der Verbindung, so dass die dritte Getriebewelle oder das Sonnenrad entsprechend der auf die dritte Getriebewelle oder das Sonnenrad wirkenden Kräfte beschleunigen. Vorteilhaft lassen sich mit der bisher beschriebenen Topologie des Getriebes mit den ersten bis neunten Schaltelementen, neben den bereits erwähnten, weitere Betriebsmodi einstellen. So ergeben sich je nach Kombination des Schließens und Öffnens der Schaltelemente sechs unterschiedliche Übersetzungsverhältnisse zwischen der Eingangswelle und der Ausgangswelle. In einer anderen Ausgestaltung der Erfindung umfasst das zweite, dritte, fünfte, siebte, achte und/ oder das neunte Schaltelement eine Klauenkupplung.

Das zweite, dritte, fünfte, siebte, achte und/ oder das neunte Schaltelement ist als Klauenkupplung ausgeführt. Das dritte und siebte oder das neunte und fünfte oder das achte und zweite Schaltelement sind entweder geöffnet oder wechselseitig geschlossen, also niemals gleichzeitig geschlossen. Daher können diese jeweils zwei Schaltelemente vorteilhaft jeweils mittels eines Aktuators und einer Schaltgabel oder Schaltschwinge angesteuert werden. Der Aktuator steuert hierzu insbesondere drei Positionen an: erstgenanntes Schaltelement geschlossen; beide Schaltelemente geöffnet; letztgenanntes Schaltelement geschlossen. Vorteilhaft wird eine Möglichkeit zur steuerbaren Kopplung der Komponenten des Getriebes bereitgestellt.

In einer weiteren Ausgestaltung der Erfindung umfasst das erste, vierte und/ oder das sechste Schaltelement eine Kupplung.

Zur Verbindung einzelner Komponenten des Getriebes sind das erste, vierte und/ oder das sechste Schaltelement als Kupplung ausgeführt. Bei einer derartigen Kupplung kann es sich insbesondere um eine Trockenkupplung, Nasskupplung oder Klauenkupplung handeln. Vorteilhaft werden Möglichkeiten für eine steuerbare Verbindung der Komponenten des Getriebes bereitgestellt.

In einer anderen Ausgestaltung der Erfindung ist ein erstes Antriebsaggregat, insbesondere eine Verbrennungskraftmaschine, mit der Eingangswelle koppelbar und/ oder ein zweites Antriebsaggregat, insbesondere eine elektrische Maschine, mit der ersten Getriebewelle koppelbar.

An der Eingangswelle ist eingangsseitig das erste Antriebsaggregat ankoppelbar. Das zweite Antriebsaggregat ist mit der ersten Getriebewelle koppelbar. Vorteilhaft kann für einen generatorischen Betrieb des zweiten Antriebsaggregates, beispielsweise einer elektrischen Maschine, beispielsweise zum Laden einer Batterie, das erste Antriebsaggregat oder der Verbrennungsmotor mittels Schließen des ersten Schaltelements und Öffnen der anderen Schaltelemente mit der elektrischen Maschine verbunden werden. Da dabei beide Antriebsaggregate von der Ausgangswelle abgekoppelt sind und somit kein Drehmoment auf die Ausgangswelle übertragen wird, kann dieses Laden bei beispielsweise stillstehender Ausgangswelle, also beispielsweise während des Stillstands eines Fahrzeugs, erfolgen (Standladen). Bei beispielsweise stillstehender Ausgangswelle wird eine direkte Übertragung der rotatorischen Energie des ersten Antriebsaggregates zum zweiten Antriebsaggregat oder umgekehrt, beispielsweise zum Starten eines Verbrennungsmotors, ermöglicht.

Bei geöffnetem erstem Schaltelement ist das zweite Antriebsaggregat jeweils über eine der sechs festen Übersetzungen mit der Ausgangsswelle verbunden, so dass ein Antreiben der Ausgangswelle nur mittels des zweiten Antriebsaggregates mit einer der sechs festen Übersetzungen erfolgt. Mittels, insbesondere dosiertem, Schließen des ersten Schaltelements kann aus dem Fahren mittels dem zweiten Antriebsaggregat das erste Antriebsaggregat angetrieben und beispielsweise gestartet werden, falls das erste Antriebsaggregat ein Verbrennungsmotor ist.

Es besteht auch die Möglichkeit, dass das erste Antriebsaggregat beispielsweise als elektrische Maschine ausgestaltet ist und das zweite Antriebsaggregat beispielsweise als Verbrennungskraftmaschine ausgestaltet ist. In einer solchen Konfiguration können sich mittels des Getriebes andere Funktionalitäten und Betriebsmodi für das Zusammenwirken der Komponenten ergeben, die hier nicht weiter ausgeführt werden.

In einer anderen Ausgestaltung der Erfindung erfolgt das Ändern der Übersetzungsverhältnisse des Getriebes zugkraftunterbrechungsfrei.

Ein Ändern der Übersetzungsverhältnisse des Getriebes, insbesondere ein Schalten in einen anderen Gang oder in einen anderen Betriebsmodus des Getriebes erfolgt zugkraftunterbrechungsfrei, wenn insbesondere für den Wechsel aus einem Betriebsmodus des Getriebes in einen anderen eines der Schaltelement seinen Zustand beibehält, ein zweites der Schaltelemente aus einem geschlossenen Zustand in einen geöffneten Zustand überführt wird und ein drittes der Schaltelemente aus einem geöffneten in einen geschlossenen Zustand überführt wird. Vorteilhaft wird ein Getriebe bereitgestellt, bei dem das Wechseln der Gangstufen ohne eine Unterbrechung der Zugkraft ermöglicht wird.

In einer anderen Ausgestaltung der Erfindung umfasst das Getriebe eine Ansteuerung zur Ansteuerung mindestens eines der Schaltelemente in Abhängigkeit eines vorgegebenen Betriebsvorgabesignals.

Es ist eine Ansteuerung vorgesehen welche in Abhängigkeit eines vorgegebenen Betriebsvorgabesignals, beispielsweise ein angefordertes Drehmoment, eine vorgegebene Drehzahl, oder ein bestimmter Betriebspunkt der Antriebsaggregate, mindestens eines der Schaltelemente ansteuert. Die genannten Parameter des Betriebsvorgabesignals können auf die Ausgangswelle des Getriebes, auf die Eingangswelle oder auf die mit den Antriebsaggregaten zu verbindenden Wellen bezogen sein. Vorteilhaft wird eine Steuerung des Getriebes ermöglicht.

Ferner betrifft die Erfindung eine Hybrid-Antriebsanordnung mit einem Getriebe, wobei die Hybridantriebsanordnung ein zweites Antriebsaggregat und/ oder einen Pulswechselrichter, elektrische Energiequelle oder ein erstes Antriebsaggregat umfasst.

Es wird eine Hybridantriebsanordnung mit einem bisher beschriebenen Getriebe bereitgestellt. Die Hybridantriebsanordnung umfasst ein zweites Antriebsaggregat. Insbesondere umfasst die Hybridantriebsanordnung einen Pulswechselrichter, eine elektrische Energiequelle und oder ein erstes Antriebsaggregat. Das zweite Antriebsaggregat ist insbesondere mit der ersten Getriebewelle gekoppelt oder verbunden. Der Pulswechselrichter ist insbesondere zur Versorgung des zweiten Antriebsaggregates, insbesondere einer elektrischen Maschine, vorgesehen. Hierzu wandelt er insbesondere die elektrische Energie einer elektrischen Energiequelle, beispielsweise einer Batterie und/ oder einer Brennstoffzelle um. Das erste Antriebsaggregat ist insbesondere mit der Eingangswelle gekoppelt oder verbunden. Vorteilhaft wird eine Hybridantriebsanordnung, welche für den Einsatz in einem Fahrzeug eingerichtet ist, bereitgestellt.

Ferner umfasst die Erfindung ein Fahrzeug mit einer beschriebenen Hybridantriebsanordnung. Vorteilhaft wird ein Fahrzeug bereitgestellt, welches eine Hybridantriebsanordnung umfasst.

Ein nicht erfindungsgemäßes Verfahren zum Betrieb einer Hybridantriebsanordnung mit einem Getriebe umfasst folgende Schritte:
Ermitteln eines Betriebsvorgabesignals;
Ansteuern mindestens eines der Schaltelemente zur Einstellung der Funktionalität des Getriebes in Abhängigkeit des Betriebsvorgabesignals (BV).

Es wird ein Verfahren zum Betrieb einer Hybridantriebsanordnung mit einem Getriebe bereitgestellt. Dabei wird ein Betriebsvorgabesignal ermittelt. Mindestens eines der Schaltelemente wird zur Einstellung der Funktionalität des Getriebes oder eines entsprechenden Betriebsmodus in Abhängigkeit des Betriebsvorgabesignals geschlossen oder geöffnet. Das Betriebsvorgabesignal wird in Abhängigkeit einer Betriebsstrategie, eines Fahrerwunsches oder Fahrpedals, eines Batteriemanagementsystems oder anderer beispielsweise in einem Fahrzeug verfügbaren Systemen vorgegeben. In Abhängigkeit dieses Betriebsvorgabesignals werden die Schaltelemente zur Einstellung der entsprechenden Funktionalität oder des Betriebsmodus des Getriebes angesteuert, insbesondere die Kupplungen oder Bremsen geschlossen oder geöffnet. Die Funktionalität des Getriebes oder der Betriebsmodus sind insbesondere die unterschiedlichen Übersetzungsverhältnisse der verschiedenen Gangstufen, oder die verschiedenen Modi oder Betriebsmodi, beispielsweise ein generatorischer Betrieb des zweiten Antriebsaggregates bei stillstehender Ausgangswelle. Vorteilhaft wird ein Verfahren für den Betrieb der Hybridantriebsanordnung bereitgestellt.

Es versteht sich, dass die Merkmale, Eigenschaften und Vorteile des Getriebes entsprechend auf die Hybridantriebsanordnung bzw. das Fahrzeug und umgekehrt zutreffen bzw. anwendbar sind. Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Im Folgenden soll die Erfindung anhand einiger Figuren näher erläutert werden, dazu zeigen:
Figur 1: eine schematische Darstellung der Hybridantriebsstranganordnung mit einem Getriebe.
Figur 2: eine Schaltmatrix des Getriebes.
Figur 3: ein schematisch dargestelltes Fahrzeug mit einer Hybridantriebstranganordnung.
Figur 4: ein schematisch dargestelltes, nicht erfindungsgemäßes Verfahren zum Betrieb einer Hybridantriebstranganordnung.

### Ausführungsformen der Erfindung

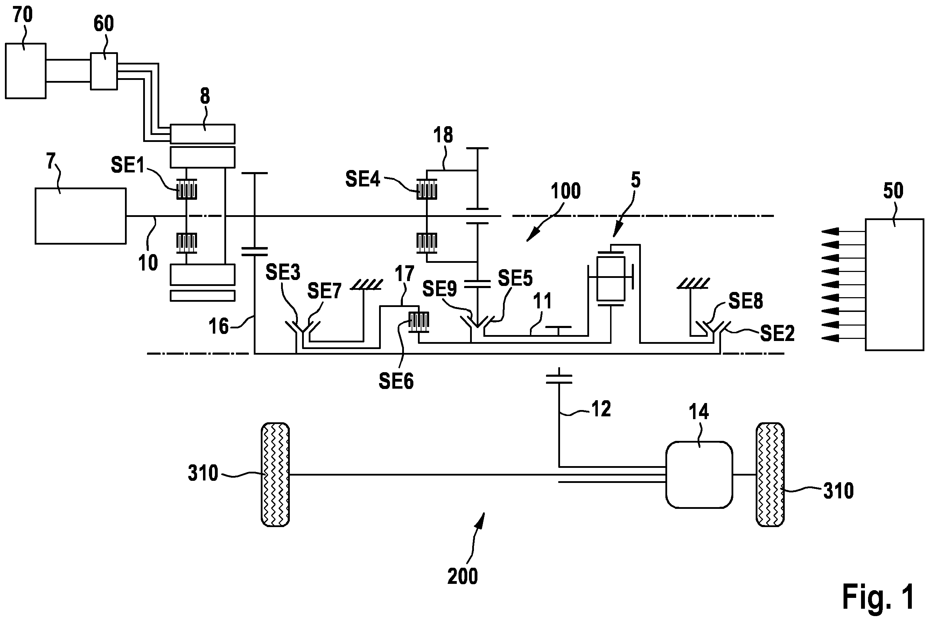

Die Figur 1 zeigt eine Hybridantriebstranganordnung 200 mit einem ersten Antriebsaggregat 7, insbesondere einem Verbrennungsmotor, und einem zweiten Antriebsaggregat 8, insbesondere einer elektrischen Maschine, und einem Getriebe 100. Insbesondere umfasst die Hybridantriebstranganordnung einen Pulswechselrichter 60 zur Versorgung des zweiten Antriebsaggregates 8 mit elektrischer Energie. Weiter umfasst die Hybridantriebstranganordnung 200 insbesondere eine elektrische Energiequelle 70, welche mit dem Pulswechselrichter 60 verbunden ist. Das Getriebe 100 umfasst die Eingangswelle 10 und die Ausgangswelle 11. Weiter umfasst das Getriebe 100 ein Planetengetriebe 5. Weiter
umfasst das Getriebe 100 neun Schaltelemente SE1..SE9. Das erste Schaltelement SE1, insbesondere eine Kupplung, ist dazu eingerichtet, die Eingangswelle 10 mit einer ersten Getriebewelle 16 zu verbinden oder zu trennen. Das zweite Schaltelement SE2, insbesondere eine Klauenkupplung, ist dazu eingerichtet, die erste Getriebewelle 16 mit dem Hohlrad des Planetengetriebes 5 zu verbinden oder zu trennen. Das dritte Schaltelement SE3, insbesondere eine Klauenkupplung, ist dazu eingerichtet, die erste Getriebewelle 16 mit einer zweiten Getriebewelle 17 zu verbinden oder zu trennen. Das vierte Schaltelement SE4, insbesondere eine Kupplung, ist dazu eingerichtet, die erste Getriebewelle 16 mit einer dritten Getriebewelle 18 zu verbinden oder zu trennen. Das fünfte Schaltelement SE5, insbesondere eine Klauenkupplung, ist dazu eingerichtet, die dritte Getriebewelle 18 mit der Ausgangswelle 11 und somit mit dem Planetenträger des Planetengetriebes 5 zu verbinden oder zu trennen. Das sechste Schaltelement SE6, insbesondere eine Kupplung, ist dazu eingerichtet, die zweite Getriebewelle 17 mit dem Sonnenrad des Planetengetriebes 5 zu verbinden oder zu trennen. Weiter kann das Getriebe 100 ein siebtes Schaltelement SE7 aufweisen. Das siebte Schaltelement SE7, insbesondere eine Klauenkupplung, ist dazu eingerichtet, die zweite Getriebewelle 17 mit einem Fixpunkt zu koppeln, beispielsweise am Gehäuse (nicht dargestellt) des Getriebes 100 abzustützen. Weiter kann das Getriebe 100 ein achtes Schaltelement SE8 umfassen. Das achte Schaltelement SE8, insbesondere eine Klauenkupplung, ist dazu eingerichtet, das Hohlrad des Planetengetriebes 5 mit einem Fixpunkt zu koppeln, beispielsweise am Gehäuse (nicht dargestellt) des Getriebes 100 abzustützen. Weiter kann das Getriebe 100 ein neuntes Schaltelement SE9 umfassen. Das neunte Schaltelement SE9, insbesondere eine Klauenkupplung, ist dazu eingerichtet, die dritte Getriebewelle 18 mit dem Sonnenrad des Planetengetriebes 5 zu koppeln. Das Getriebe ist weiter dazu eingerichtet, für den Betrieb mit einem ersten Antriebsaggregat 7 über die Eingangswelle 10 gekoppelt oder verbunden zu werden. In der Figur 1 ist dazu dargestellt, dass die Welle des Antriebsaggregates 7 mit der Eingangswelle 10 verbunden wird. Das zweite Antriebsaggregat 8, insbesondere eine elektrische Maschine, wird für den Betrieb des Getriebes 100 wie in der Figur 1 dargestellt mit der ersten Getriebewelle 16 verbunden. Für eine Optimierung der Übersetzungsverhältnisse ist die Ausgangswelle 11 beispielsweise über einen Abtrieb 12, insbesondere einen Stirnradsatz, beispielsweise mit einem Differential 14 verbunden, über welches die Bewegungen auf die Räder 310 übertragen werden. Für die Ansteuerung der Schaltelemente ist eine Ansteuerung 50 vorgesehen, die das Verfahren zum Betrieb der Hybridantriebsanordnung mit dem Getriebe ausführt. Die Steuerleitungen zwischen der Ansteuerung 50 und den einzelnen Schaltelementen SE1..SE9 sind aus Übersichtlichkeitsgründen nur als Pfeil angedeutet und nicht vollständig dargestellt. Die Kommunikation zwischen den Schaltelementen SE1..SE9 und der Vorrichtung kann mittels der Steuerleitungen als auch mittels eines BUS-Systems oder kabellos erfolgen.

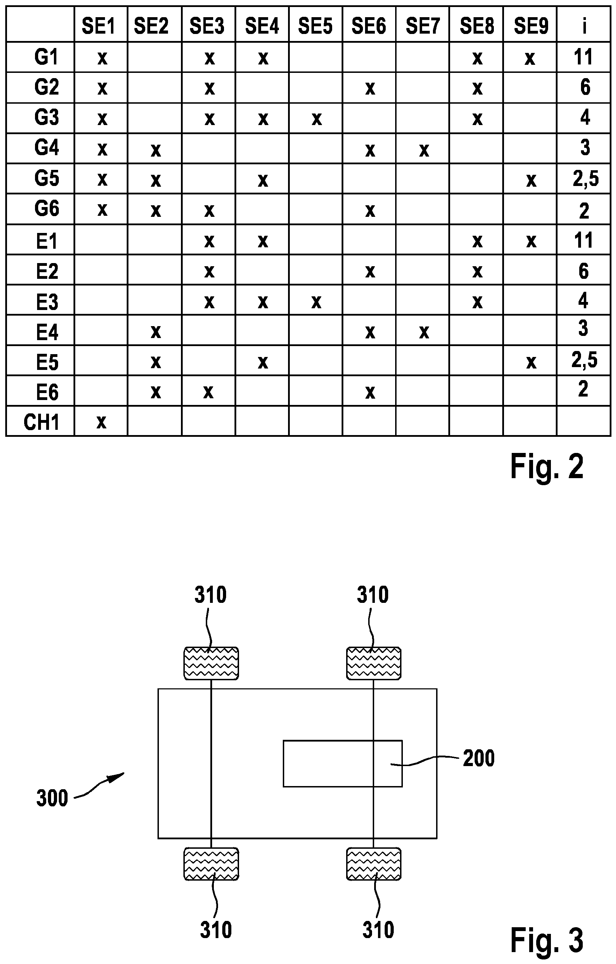

Figur 2 zeigt eine Schaltmatrix des Getriebes. In den Spalten sind die einzelnen Schaltelemente SE1..SE9 angegeben und in der letzten Spalte beispielhaft ein sich zwischen einem der Antriebsaggregate und der Ausgangswelle ergebendes ungefähres Übersetzungsverhältnis. In den Zeilen sind die unterschiedlichen Gangstufen, Gänge oder Betriebsmodi des Getriebes angegeben. Mittels Kreuzen ist in der Schaltmatrix dargestellt, welches der Schaltelemente aktiviert sein muss, damit sich der entsprechende Gang oder Betriebsmodus einstellt. Mit Aktivierung der Schaltelemente ist hierbei insbesondere gemeint, dass eine Kupplung geschlossen wird oder eine Bremse betätigt wird, sodass über die Kupplung eine Kraft von einer Welle auf eine weitere Welle übertragen wird oder mittels der Bremse eine Kraft auf einen Fixpunkt, insbesondere das Getriebegehäuse, übertragen wird. Aus der Schaltmatrix ist ersichtlich, dass sich je nach Kombination der vier Schaltelemente sechs Gänge G1.....G6 einstellen lassen, wobei der erste Gang G1 das höchste Übersetzungsverhältnis und der sechste Gang G6 das niedrigste Übersetzungsverhältnis aufweist. Bei den Gängen G1..G6 liegt bevorzugt jeweils zwischen dem erstem Antriebsaggregat 7 und der Ausgangswelle 11 ein festes Drehzahlverhältnis entsprechend der in der letzten Spalte angegebenen Übersetzung an. Die Ausgangswelle wird in den Gängen G1..G6 entweder von dem ersten Antriebsaggregat 7 alleine oder mit dem zweiten Antriebsaggregat 8 zusammen angetrieben. Insbesondere sind dies verbrennungsmotorische oder hybridische Gänge, beispielsweise wenn das erste Antriebsaggregat 7 ein Verbrennungsmotor ist und das zweite Antriebsaggregat 8 eine elektrische Maschine. Diese Gänge ermöglichen auch eine Lastpunktanhebung des Verbrennungsmotors, so dass die elektrische Maschine generatorisch betrieben werden kann und ein Laden einer Batterie während des Betriebs, insbesondere Fahrbetrieb eines Fahrzeugs, erfolgen kann. In den folgenden Zeilen der Matrix schließen sich die Gänge E1 bis E6 oder Betriebsmodi an, in denen nur das zweite Antriebsaggregat 8 mit der Ausgangswelle 11 verbunden ist. Hierzu muss inbesondere das erste Schaltelement SE1 geöffnet sein, damit keine Verbindung zum ersten Antriebsaggregat 7 besteht. Es ergeben sich insbesondere elektromotorische Gänge, beispielsweise wenn das zweite Antriebsaggregat eine elektrische Maschine ist. Vorteilhaft kann in diesen Gängen ein Fahrzeug lokal emissionsfrei betrieben werden. Beispielhaft ergeben sich die in der Schaltmatrix angegebenen Übersetzungen zwischen dem zweiten Antriebsaggregat 8 und der Abtriebswelle 11.

Ein weiterer Modus CH1, oder auch Standladen, genannt, ergibt sich, wenn nur das erste Schaltelement SE 1 geschlossen ist und die verbleibenden Schaltelemente SE2..SE9 geöffnet sind. Die Antriebsaggregate 7 und 8 werden dabei miteinander gekoppelt, wobei keine Verbindung zur Ausgangswelle 11 besteht. In diesem Betriebsmodus kann während des Stillstands der Ausgangswelle, insbesondere eines Fahrzeugs, mittels des ersten Antriebsaggregates 7 das zweite 8 angetrieben werden, beispielsweise generatorisch zum Laden einer elektrischen Energiequelle 70, insbesondere einer Batterie, verwendet werden. Alternativ kann mittels des zweiten Antriebsaggregates 8 auch das erste 7 angetrieben werden und beispielsweise ein Verbrennungsmotorstart oder eine Diagnose des Verbrennungsmotors durchgeführt werden, falls das erste Antriebsaggregat 7 ein Verbrennungsmotor ist und das zweite Antriebsaggregat 8 eine elektrische Maschine ist.

Figur 3 zeigt ein Fahrzeug 300 mit Rädern 310, wobei das Fahrzeug eine Hybridantriebsanordnung 200, wie oben beschrieben, umfasst.

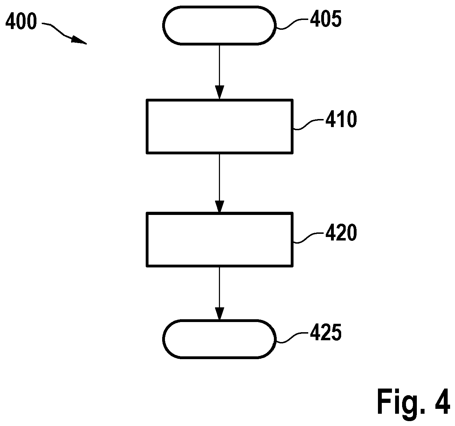

Figur 4 zeigt ein Ablaufdiagramm eines nicht erfindungsgemäßen Verfahrens 400 zum Betrieb einer Hybridantriebsanordnung 200 mit einem Getriebe 100. Mit Schritt 405 startet das Verfahren. In Schritt 410 wird ein Betriebsvorgabesignal BV ermittelt und in Schritt 420 mindestens eines der Schaltelemente SE1....SE9 zur Einstellung der Funktionalität des Getriebes 100 in Abhängigkeit des Betriebsvorgabesignals BV angesteuert. Mit Schritt 425 endet das Verfahren. Das Betriebsvorgabesignal BV ist hierbei entweder ein Parameter für eine physikalische Größe im Getriebe 100 wie z.B. ein Drehmoment oder eine Drehzahl oder eine zu übertragende Leistung, welche an einer Komponente des Getriebes 100 anliegen oder übertragen werden soll. Diese Komponenten sind insbesondere die Eingangswelle 10, die Ausgangswelle 11 aber auch die Parameter an den Antriebsaggregaten 7, 8 oder den Schaltelementen SE1..SE9. Darüber hinaus kann das Betriebsvorgabesignal BV auch einen bestimmten Betriebsmodus wie einen der vier Gänge G1.....G6 oder der zwei Gänge E1..E6, welche nur mit dem zweiten Antriebsaggregat 8 betrieben werden, oder auch die besondere Funktion Standladen CH1 darstellen. In Abhängigkeit dieses Betriebsvorgabesignals BV werden die Schaltelemente SE1 bis SE9 entsprechend der Schaltmatrix angesteuert, um das Getriebe 100 in den entsprechenden Gang oder Betriebsmodus zu schalten. Für eine zugkraftunterbrechungsfreie Umschaltung zwischen den einzelnen Gängen oder Betriebsmodi ist es notwendig, dass eines der Schaltelemente SE1....SE9 seinen Zustand vor und nach der Schaltung beibehält, wobei ein weiteres Schaltelement während des Schaltens aus dem geöffneten in den geschlossenen Zustand übergeht, während ein anderes aus dem geschlossenen in den geöffneten Zustand übergeht.

## Patentansprüche

1. Getriebe (100) für eine Hybridantriebsanordnung,
welches mit zwei Antriebsaggregaten (7, 8) koppelbar ist, mit
einer Eingangswelle (10) und einer Ausgangswelle (11),
mindestens einem ersten, zweiten, dritten, vierten, fünften, sechsten und siebten Schaltelement (SE1, SE2, SE3, SE4, SE5, SE6, SE7),
und mindestens einem Planetengetriebe (5),
wobei
die Eingangswelle (10) mittels dem ersten Schaltelement (SE1) koppelbar ist mit einer ersten Getriebewelle (16) und
die erste Getriebewelle (16) mittels dem zweiten Schaltelement (SE2) koppelbar ist mit dem Hohlrad des Planetengetriebes (5) und
die erste Getriebewelle (16) mittels dem dritten Schaltelement (SE3) koppelbar ist mit einer zweiten Getriebewelle (17) und
die erste Getriebewelle (16) mittels dem vierten Schaltelement (SE4) koppelbar ist mit einer dritten Getriebewelle (18) und
wobei die Ausgangswelle (11) mittels dem fünften Schaltelement (SE5) koppelbar ist mit der dritten Getriebewelle 18 und
die Ausgangswelle (11) mit dem Planetenträger des Planetengetriebes (5) gekoppelt ist
wobei die zweite Getriebewelle 17 mittels dem sechsten Schaltelement (SE6) koppelbar ist mit dem Sonnenrad des Planetengetriebes (5), wobei das siebte Schaltelement (SE7) dazu eingerichtet ist, die zweite Getriebewelle 17 mit einem Fixpunkt zu koppeln.

2. Getriebe nach Anspruch 1,
mit einem achten Schaltelement (SE8), welches dazu eingerichtet ist, das Hohlrad des Planetengetriebes (5) mit einem Fixpunkt zu koppeln.

3. Getriebe nach Anspruch 1,
mit einem neunten Schaltelement (SE9), welches dazu eingerichtet ist, die dritte Getriebewelle 18 mit dem Sonnenrad des Planetengetriebes (5) zu koppeln.

4. Getriebe nach einem der vorhergehenden Ansprüche
und nach Anspruch 2, soweit das achte Schaltelement (SE8) betroffen ist und nach Anspruch 3, soweit das neunte Schaltelement (SE9) betroffen ist, wobei das zweite, dritte, fünfte, siebte, achte und/ oder das neunte Schaltelement (SE2, SE3, SE5, SE7, SE8, SE9) eine Klauenkupplung umfasst.

5. Getriebe nach einem der vorhergehenden Ansprüche,
wobei das erste, vierte und/ oder das sechste Schaltelement (SE1, SE4, SE6) eine Kupplung, insbesondere Schlupfkupplung, umfasst.

6. Getriebe nach einem der vorhergehenden Ansprüche,
wobei ein erstes Antriebsaggregat (7), insbesondere eine Verbrennungskraftmaschine, mit der Eingangswelle (10) koppelbar ist und/ oder ein zweites Antriebsaggregat (8), insbesondere eine elektrische Maschine, mit der ersten Getriebewelle 16 koppelbar ist.

7. Getriebe nach einem der vorhergehenden Ansprüche,
wobei ein Ändern der Übersetzungsverhältnisse des Getriebes (100) zugkraftunterbrechungsfrei erfolgt.

8. Getriebe nach einem der vorhergehenden Ansprüche,
mit einer Ansteuerung (50) zur Ansteuerung mindestens eines der Schaltelemente (SE1..SE9) in Abhängigkeit eines vorgegebenen Betriebsvorgabesignals (BV).

9. Hybridantriebsanordnung (200) mit einem Getriebe (100) nach einem der Ansprüche 1 bis 8, wobei die Hybridantriebsanordnung ein zweites Antriebsaggregat (8) und/ oder einen Pulswechselrichter (60), elektrische Energiequelle (70) oder ein erstes Antriebsaggregat (7) umfasst.

10. Fahrzeug (300) mit einer Hybridantriebsanordnung (200) nach Anspruch 9.

## Claims

1. Transmission (100) for a hybrid drive arrangement, which can be coupled to two drive units (7, 8), comprising an input shaft (10) and an output shaft (11),
at least a first, second, third, fourth, fifth, sixth and seventh switching element (SE1, SE2, SE3, SE4, SE5, SE6, SE7),
and at least one planetary transmission (5),
wherein
the input shaft (10) can be coupled to a first transmission shaft (16) by means of the first switching element (SE1) and
the first transmission shaft (16) can be coupled to the internal gear of the planetary transmission (5) by means of the second switching element (SE2) and
the first transmission shaft (16) can be coupled to a second transmission shaft (17) by means of the third switching element (SE3) and
the first transmission shaft (16) can be coupled to a third transmission shaft (18) by means of the fourth switching element (SE4) and
wherein the output shaft (11) can be coupled to the third transmission shaft (18) by means of the fifth switching element (SE5) and
the output shaft (11) is coupled to the planet carrier of the planetary transmission (5)
wherein the second transmission shaft (17) can be coupled to the sun gear of the planetary transmission (5) by means of the sixth switching element (SE6), wherein the seventh switching element (SE7) is configured to couple the second transmission shaft (17) to a fixed point.

2. Transmission according to Claim 1,
having an eighth switching element (SE8), which is configured to couple the internal gear of the planetary transmission (5) to a fixed point.

3. Transmission according to Claim 1,
having a ninth switching element (SE9), which is configured to couple the third transmission shaft (18) to the sun gear of the planetary transmission (5).

4. Transmission according to one of the preceding claims,
and according to Claim 2, if the eighth switching element (SE8) is involved
and according to Claim 3, if the ninth switching element (SE9) is involved,
wherein the second, third, fifth, seventh, eighth and/or the ninth switching element (SE2, SE3, SE5, SE7, SE8, SE9) comprises a dog clutch.

5. Transmission according to one of the preceding claims,
wherein the first, fourth and/or the sixth switching element (SE1, SE4, SE6) comprises a clutch, in particular a slipping clutch.

6. Transmission according to one of the preceding claims,
wherein a first drive unit (7), in particular an internal combustion engine, can be coupled to the input shaft (10), and/or a second drive unit (8), in particular an electric machine, can be coupled to the first transmission shaft (16).

7. Transmission according to one of the preceding claims,
wherein a change in the transmission ratios of the transmission (100) is carried out without interrupting the tractive force.

8. Transmission according to one of the preceding claims,
having an actuator (50) for actuating at least one of the switching elements (SE1..SE9) depending on a predefined operating specification signal (BV).

9. Hybrid drive arrangement (200) having a transmission (100) according to one of Claims 1 to 8, wherein the hybrid drive arrangement comprises a second drive unit (8) and/or a pulse-width-modulated converter (60), an electric energy source (70) or a first drive unit (7).

10. Vehicle (300) having a hybrid drive arrangement (200) according to Claim 9.

## Revendications

1. Transmission (100) pour un agencement d'entraînement hybride,
qui peut être accouplée à deux organes d'entraînement (7, 8), avec
un arbre d'entrée (10) et un arbre de sortie (11),
au moins un premier, un deuxième, un troisième, un quatrième, un cinquième, un sixième et un septième élément de commutation (SE1, SE2, SE3, SE4, SE5, SE6, SE7),
et au moins un engrenage planétaire (5),
dans laquelle
l'arbre d'entrée (10) peut être accouplé au moyen du premier élément de commutation (SE1) à un premier arbre de transmission (16) et
le premier arbre de transmission (16) peut être accouplé au moyen du deuxième élément de commutation (SE2) à la couronne de l'engrenage planétaire (5) et
le premier arbre de transmission (16) peut être accouplé au moyen du troisième élément de commutation (SE3) à un deuxième arbre de transmission (17) et
le premier arbre de transmission (16) peut être accouplé au moyen du quatrième élément de commutation (SE4) à un troisième arbre de transmission (18) et
dans laquelle l'arbre de sortie (11) peut être accouplé au moyen du cinquième élément de commutation (SE5) au troisième arbre de transmission (18) et
l'arbre de sortie (11) est accouplé au porte-satellites de l'engrenage planétaire (5),
dans laquelle le deuxième arbre de transmission (17) peut être accouplé au moyen du sixième élément de commutation (SE6) au planétaire de l'engrenage planétaire (5), dans laquelle le septième élément de commutation (SE7) est conçu pour accoupler le deuxième arbre de transmission (17) à un point fixe.

2. Transmission selon la revendication 1,
avec un huitième élément de commutation (SE8), qui est conçu pour accoupler la couronne de l'engrenage planétaire (5) à un point fixe.

3. Transmission selon la revendication 1,
avec un neuvième élément de commutation (SE9), qui est conçu pour accoupler le troisième arbre de transmission (18) au planétaire de l'engrenage planétaire (5).

4. Transmission selon l'une quelconque des revendications précédentes,
et selon la revendication 2, dans la mesure où le huitième élément de commutation (SE8) est concerné,
et selon la revendication 3, dans la mesure où le neuvième élément de commutation (SE9) est concerné,
dans laquelle le deuxième, le troisième, le cinquième, le septième, le huitième et/ou le neuvième élément de commutation (SE2, SE3, SE5, SE7, SE8, SE9) comprennent un embrayage à crabots.

5. Transmission selon l'une quelconque des revendications précédentes,
dans laquelle le premier, le quatrième et/ou le sixième élément de commutation (SE1, SE4, SE6) comprennent un embrayage, notamment un embrayage à glissement.

6. Transmission selon l'une quelconque des revendications précédentes,
dans laquelle un premier organe d'entraînement (7), notamment une machine à combustion interne, peut être accouplé à l'arbre d'entrée (10) et/ou un deuxième organe d'entraînement (8), notamment une machine électrique, peut être accouplé au premier arbre de transmission (16).

7. Transmission selon l'une quelconque des revendications précédentes,
dans laquelle une modification des rapports de transmission de la transmission (100) s'effectue sans interruption de la force de traction.

8. Transmission selon l'une quelconque des revendications précédentes,
avec une commande (50) pour la commande d'au moins l'un des éléments de commutation (SE1...SE9) en fonction d'un signal de consigne de fonctionnement (BV) prédéfini.

9. Agencement d'entraînement hybride (200) avec une transmission (100) selon l'une quelconque des revendications 1 à 8, l'agencement d'entraînement hybride comprenant un deuxième organe d'entraînement (8) et/ou un onduleur à impulsions (60), une source d'énergie électrique (70) ou un premier organe d'entraînement (7).

10. Véhicule (300) avec un agencement d'entraînement hybride (200) selon la revendication 9.
